# EUROPÄISCHE PATENTANMELDUNG

(11) **EP 1 079 555 A2**
(43) Veröffentlichungstag der Anmeldung: **28.02.2001**
(21) Anmeldenummer: 00113973.2
(22) Anmeldetag: 01.07.2000
(51) Int. Cl.: H04H 1/00, G08G 1/09

(54) **Einrichtung und Verfahren zum Empfang, zur Weiterverarbeitung und zur Wiedergabe eines Paketes komprimierter Daten**

(30) Priorität: 27.08.1999 DE 19940928
(71) Anmelder: BECKER GmbH, D-76307 Karlsbad (DE)
(72) Erfinder: Wietzke, Joachim, Dipl.-Ing., 76228 Karlsruhe (DE); Lappe, Dirk, Dipl.-Ing., 76288 Karlsruhe (DE)
(74) Vertreter: Patentanwälte Westphal, Mussgnug & Partner

(57) **Zusammenfassung**

Mit einer Empfangseinrichtung (1) werden komprimierte Daten (11) empfangen und mittels einer Einrichtung (2) zum Dekomprimieren dekomprimiert. Die komprimierten Daten (11) oder die bereits dekomprimierten Daten (12) werden in einer Speichervorrichtung (23) gespeichert. Um die Zeitspanne zwischen dem vollständigen Speichern der Daten und der Wiedergabe der Daten zu verkürzen, wird mit dem Auslesen der Daten aus der Speichervorrichtung (23) und der Wiedergabe der Daten mittels einer Wiedergabeeinheit (5) bereits begonnen, bevor der Speichervorgang abgeschlossen ist. Es werden daher Daten aus der Speichervorrichtung (23) gelesen, während gleichzeitig neue Daten in der Speichervorrichtung (23) gespeichert werden.

## Beschreibung

Die vorliegende Erfindung betrifft eine Einrichtung und ein Verfahren zum Empfang und zur Weiterverarbeitung eines Paketes komprimierter Daten.

Diese Daten können Audio- oder Videodaten sein. Die zu empfangenden Daten sind, um die Übertragungsdauer auf eine Empfangseinrichtung auf ein vernünftiges Maß reduzieren zu können, komprimiert, zum Beispiel nach der mittlerweile allseits bekannten MP-3-Norm.

Bei herkömmlichen Einrichtungen zum Empfang und zur Weiterverarbeitung solcher Pakete von Daten werden die empfangenen Daten dekomprimiert und abgespeichert. Wenn das gesamte Paket von Daten dekomprimiert und abgespeichert ist, können die gespeicherten Daten zum Beispiel über einen Lautsprecher, einen Kopfhörer oder über ein Fernsehgerät wiedergegeben werden (z. B. "Wiedergabe eines Musiktitels"). Es sind Übertragungsverfahren bekannt, bei denen die Daten schneller empfangen werden als sie wiedergegeben werden. Es gibt aber auch andere Übertragungsverfahren, bei denen die Wiedergabe der Daten schneller erfolgt als deren Empfang. Es ist deshalb bei beiden Verfahren ein Zwischenspeicher erforderlich, um eine lückenlose Datenwiedergabe zu gewährleisten. Es besteht also eine oft unerwünschte Zeitspanne zwischen Beginn des Empfangs des Paketes von Daten und frühestmöglichem Beginn der Wiedergabe der empfangenen und weiterverarbeiteten Daten.

Aufgabe der vorliegenden Erfindung ist es, diese Zeitspanne zu verkürzen.

Diese Aufgabe wird gelöst mit den Merkmalen der Patentansprüche 1 und 22. Vorteilhafte Aus- und Weiterbildungen sind in Unteransprüchen gekennzeichnet.

Die Erfindung wird nachstehend anhand der Zeichnung näher erläutert. Dabei zeigen
Figur 1 ein Blockschaltbild des erfindungsgemäßen Gegenstandes samt mehrerer vorteilhafter Aus- und Weiterbildungen,
Figur 2 ein Zeitschema zur Darstellung möglicher zeitlicher Zusammenhänge zwischen Laufzeit eines Paketes (z. B. Musiktitel oder Videosequenz), Empfang, Dekodierung und Wiedergabe desselben.

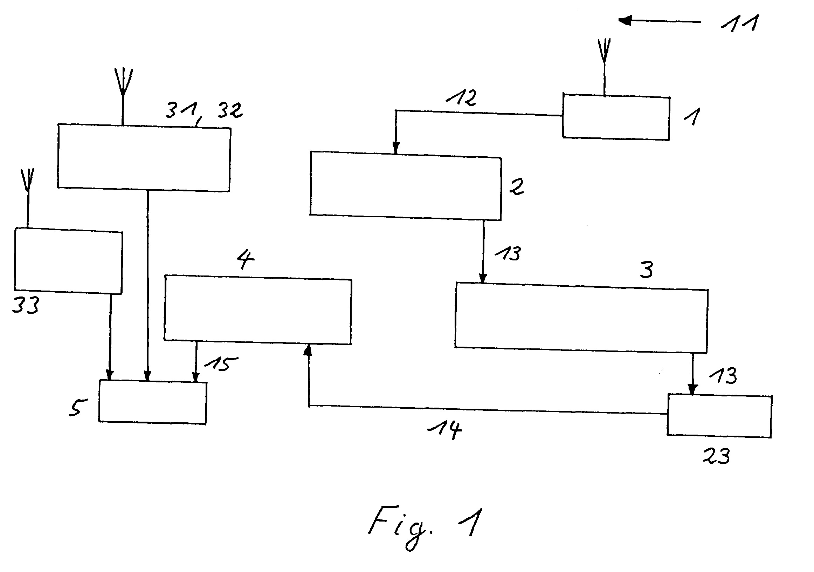

Figur 1 zeigt eine Empfangseinrichtung 1 zum Empfang von Paketen komprimierter Daten 11. Diese Pakete können z. B. Musiktitel oder Videosequenzen sein, die der Benutzer der erfindungsgemäßen Einrichtung erwerben will. Beim Empfang der komprimierten Daten 11 reicht die Empfangseinrichtung 1 diese als empfangene Daten 12 an eine Einrichtung 2 weiter zum Dekomprimieren der (komprimiert) empfangenen Daten 12. Dies geschieht erfindungsgemäß bereits zu Zeitpunkten, zu denen noch (weitere) Daten des gesamten Paketes P empfangen werden. Die dekomprimierten Daten 13 gelangen dann zur einer Einrichtung 3 zum Abspeichern der dekomprimierten Daten 13 in einer Speichervorrichtung 23. Beim Auslesen der Speichervorrichtung 23 werden die Daten über eine Leitung 14 zu einer Wiedergabesteuerung 4 übertragen, welche sie über eine Leitung 15 zu einer Wiedergabeeinheit 5 sendet und die Wiedergabe der Daten mittels der Wiedergabeeinheit 5 steuert.

Anstatt die Daten zuerst mittels der Einrichtung 2 zu dekomprimieren und anschließend die dekomprimierten Daten in der Speichervorrichtung 23 zu speichern, können auch die komprimierten Daten unmittelbar in der Speichervorrichtung 23 gespeichert werden. Die vom Speicher ausgelesenen komprimierten Daten werden dann mit der Einrichtung 2 dekomprimiert. Die Einrichtung 2 zur Dekomprimierung der Daten und die Speichervorrichtung 23 zum Speichern der Daten können daher in der Figur 1 vertauscht werden, denn es spielt keine Rolle, ob die Daten vor dem Speichern oder nach dem Speichern dekomprimiert werden.

Mit dieser erfindungsgemäßen Einrichtung ist es nun möglich, die im Paket P übertragenen (und somit empfangenen) Daten bereits ab einem Zeitpunkt anzuhören (bei Audiodaten als übertragene Daten) bzw. anzusehen (bei Videosequenzen als übertragene Daten), bei dem das gesamte Paket von komprimierten Daten 11 noch gar nicht vollständig übertragen bzw. empfangen und dekomprimiert worden ist, z. B. von Beginn des Empfangs und der Dekomprimierung an. Dies hat den Vorteil, daß die Geduld der Benutzer nicht belastet wird, weil sie schon sehr früh zu hören bzw. zu sehen bekommen, was übertragen wird: Sie brauchen nicht erst, wie bei Einrichtungen nach dem Stand der Technik üblich, den Empfang, die Dekomprimierung und das Abspeichern des gesamten Paketes P von Daten abzuwarten. Ein weiterer Vorteil besteht darin, daß der Benutzer sehr frühzeitig feststellen kann, ob ihm der Inhalt der empfangenen Daten gefällt oder nicht. Er kann somit bei Nichtgefallen bereits die Übertragung/den Empfang der Daten abbrechen, weil er den Inhalt der empfangenen Daten lange vor deren Gesamtspeicherung zur Kenntnis nehmen kann. Dies spart im Einzelfall nicht nur Zeit (kein Empfang des gesamten Paketes P von Daten notwendig), sondern ggf. auch Kosten, weil je nach Vertragsgestaltung mit dem Datenanbieter Kosten nur für vollständig empfangene Pakete anfallen.

Die Wiedergabesteuerung 4 dient dazu, in der Speichereinrichtung 23 bereits gespeicherte Daten auszulesen, um diese ausgelesenen Daten 14 wiederzugeben. Dies kann dabei entsprechend den bekannten Einrichtungen nach dem Empfang des gesamten Paketes komprimierter Daten 11 erfolgen oder aber auch erfindungsgemäß bereits während dieses Empfangs- und Dekomprimierungsvorgangs.

Mit anderen Worten ausgedrückt heißt dies, daß die Möglichkeit der Wiedergabe der ausgelesenen Daten 14 bereits während des Empfangsvorgangs für das gesamte Paket P komprimierter Daten 11 alternativ zur Wiedergabe der dekomprimierten Daten 13 implementiert ist.

Es ist vorteilhaft, wenn die komprimierten Daten 11 eines Paketes P digitalisiert sind. Weiterhin ist es vorteilhaft, wenn diese komprimierten Daten 11 drahtlos übertragene und empfangene Daten sind bzw. wenn sie drahtlos übertragen und empfangen werden.

Die Wiedergabeeinheit 5 kann, je nach Inhalt des Paketes P der komprimierten Daten 11, eine Anzeige zur optischen Wiedergabe der Daten sein (z. B. für Videosequenzen als Daten) und/oder ein Gegenstand zur akustischen Wiedergabe (z. B. Kopfhörer, Lautsprecher, ggf. in einem Fernsehgerät angeordnet). Sie kann weiterhin spezielle Ansteuerschaltungen, oftmals auch Treiberschaltungen genannt, zur Ansteuerung der Anzeige zur optischen Wiedergabe bzw. des Gegenstandes zur akustischen Wiedergabe aufweisen.

Es ist günstig, wenn die Empfangseinrichtung 1 eine Vorrichtung zum Empfang drahtlos übertragener Daten eines Telekommunikationssystems ist, insbesondere eines solchen, welches nach dem GSM-Standard arbeitet. In einem solchen Fall läßt sich die erfindungsgemäße Einrichtung z. B. mittels eines zellularen Telefons (= "Handy") als Empfangseinrichtung 1 sehr vielseitig einsetzen: Beispielsweise bei portablen Wiedergabegeräten in Form von portablen Fernsehgeräten, portablen Radiogeräten, speziellen portablen Wiedergabegeräten im Stil von (im weitesten Sinne) Walkman oder aber auch Autoradios und in Fahrzeuge eingebaute Fernsehempfänger und/oder Videorecorder. In diesen Fällen hat der Benutzer jederzeit die Möglichkeit, sich Pakete von Daten übertragen zu lassen, sich diese Daten anzuhören bzw. anzusehen und bei Nicht-Gefallen die Übertragung abzubrechen.

Besonders vorteilhaft ist es, wenn die zu empfangenden Daten 11 nach dem mittlerweile allgemein bekannten MP-3-Standard komprimiert sind und die erfindungsgemäße Einrichtung entsprechend ausgelegt ist. Mit dem MP-3-Standard lassen sich bekanntlich derzeit die höchsten Komprimierungsraten erzielen und somit auch die geringsten Übertragungszeiten realisieren.

Wie vorstehend bereits kurz angesprochen, ist es vorteilhaft, wenn die erfindungsgemäße Einrichtung Bestandteil einer Rundfunk-Empfangseinrichtung 31 ist, insbesondere eines Autoradios, vorzugsweise einer Rundfunk-Empfangseinrichtung 31 mit einem separaten Empfänger 32 zum Empfang von Verkehrsfunk-Durchsagen.

Sie kann weiterhin vorteilhafterweise Bestandteil, ggf. auch in Kombination mit der Rundfunk-Empfangseinrichtung 31, einer Funksignale empfangenden Einrichtung 33 sein, welche Funksignale empfängt, die der Ortung der diese Funksignale empfangenden Einrichtung 33 dienen entsprechend dem mittlerweile ebenfalls allgemein geläufigen GPS-System.

Als Speichervorrichtung 23 sind verschiedene Arten von Speichern einsetzbar: Nicht-flüchtige Speicher, insbesondere vom Flash-Typ, flüchtige Speicher, z. B. vom DRAM-Typ, und insbesondere flüchtige Speicher vom Typ Dual-Port-RAM (DRAM oder SRAM) oder vom FIFO-Typ. Gerade letztere haben den besonderen Vorteil, daß man gleichzeitig Daten einschreiben und (andere, bereits gespeicherte) Daten auslesen kann. Damit lassen sich nämlich einerseits dekomprimierte Daten 13 einschreiben und (kurz zuvor bereits eingeschriebene) Daten auslesen für eine Wiedergabe mittels der Wiedergabesteuerung 4.

Bei dem erfindungsgemäßen Verfahren werden also komprimierte Daten 11 eines Paketes P von komprimierten Daten 11 sukzessive mittels der Empfangseinrichtung 1 empfangen. Die empfangenen Daten 12 werden mittels der Einrichtung 2 zur Dekomprimierung dekomprimiert. Die dekomprimierten Daten 13 werden noch während des Empfangs der restlichen komprimierten Daten 11 des Paketes P der komprimierten Daten 11 einer Speichervorrichtung 23 zugeführt und in dieser abgespeichert. Gleichzeitig mit der Speicherung neuer Daten werden zuvor empfangene Daten aus der Speichervorrichtung 23 ausgelesen und einer Wiedergabesteuerung 4 zugeführt und mittels dieser wiedergegeben.

Weiterbildungen des erfindungsgemäßen Verfahrens sehen vor, daß die komprimierten Daten 11 als digitalisierte Daten empfangen werden und/oder daß sie drahtlos empfangen werden, insbesondere mittels eines Telekommunikationssystems, welches vorzugsweise nach dem GSM-Standard betrieben wird. Dabei ist es günstig, wenn die zu empfangenden komprimierten Daten 11 nach dem allgemein bekannten MP-3-Standard empfangen und dekomprimiert werden.

Eine weitere Ausbildung des erfindungsgemäßen Verfahrens sieht vor, daß die wiederzugebenden Daten 15 mittels der Wiedergabesteuerung 4 auf eine Wiedergabeeinheit 5 übertragen werden, insbesondere auf eine optische Anzeige und/oder ein akustisches Wiedergabemittel mit wenigstens einem Lautsprecher, wobei in Weiterbildung die Übertragung mittels einer Ansteuerschaltung (allgemein als Treiberschaltungen oder Graphic Controller bekannt) erfolgt.

Weiterhin ist es vorteilhaft, wenn das erfindungsgemäße Verfahren in Verbindung mit einer Rundfunk-Empfangseinrichtung 31 durchgeführt wird, insbesondere einer solchen mit einem separaten Empfänger 32 zum Empfang von Verkehrsfunk-Durchsagen. Der Vorteil liegt unter anderem darin, daß man nur ein einziges Gerät für den Rundfunkempfang und das erfindungsgemäße Verfahren benötigt und daß man den bei einem Rundfunkgerät bereits vorhandenen Lautsprecher bei dem erfindungsgemäßen Verfahren als Wiedergabeeinheit 5 mitverwenden kann, was Platz und Kosten spart, insbesondere bei einem Autoradio als Rundfunkempfangs-Einrichtung 31. An Stelle oder zusätzlich zur Rundfunkempfangs-Einrichtung 31 kann auch eine Videoempfangs-Einrichtung verwendet werden.

Ebenso vorteilhaft ist es, das erfindungsgemäße Verfahren in Verbindung mit einer Funksignale empfangenden Einrichtung 33 durchzuführen, welche Daten zur Ortung der Einrichtung 33 entsprechend dem allseits bekannten GPS-System empfängt. Es gelten im Wesentlichen dieselben Vorteile wie bei der Durchführung des entsprechenden Verfahrens in Verbindung mit einer Rundfunk-Empfangseinrichtung 31 und/oder einer Videoempfangseinrichtung.

In Weiterbildung des erfindungsgemäßen Verfahrens werden die dekomprimierten Daten 11 in einem nicht-flüchtigen Speicher als Speichervorrichtung 23 abgespeichert, insbesondere in einem solchen vom Flash-Typ. Dies hat den Vorteil, daß die gespeicherten Daten auch nach Abschalten der Spannungsversorgung für die Speichervorrichtung 23 in dieser erhalten bleiben.

In einer anderen Weiterbildung des erfindungsgemäßen Verfahrens werden die dekomprimierten Daten 13 in einen flüchtigen Speicher als Speichervorrichtung 23 abgespeichert, insbesondere einen solchen vom DRAM-Typ. Besonders günstig ist es dabei, die Daten in einem flüchtigen Speicher vom Typ Dual-Port-RAM abzuspeichern. Flüchtige Speicher können bekanntlich schneller betrieben werden als nicht-flüchtige Speicher. Sie sind außerdem in der Regel billiger als nicht-flüchtige Speicher.

Wie bereits angegeben, erfolgt die Wiedergabe der dekomprimierten (13) bzw. ausgelesenen Daten 14 bereits zu einem Zeitpunkt, zu dem noch weitere komprimierte Daten 11 des Paketes P komprimierter Daten 11 empfangen und weiterverarbeitet werden. In einer Variante des erfindungsgemäßen Verfahrens erfolgen dabei Abspeichern und Wiedergabe der Daten im Wesentlichen gleichzeitig. In einer anderen Variante wird mit der Wiedergabe der Daten zeitversetzt zum Beginn des Abspeicherns begonnen.

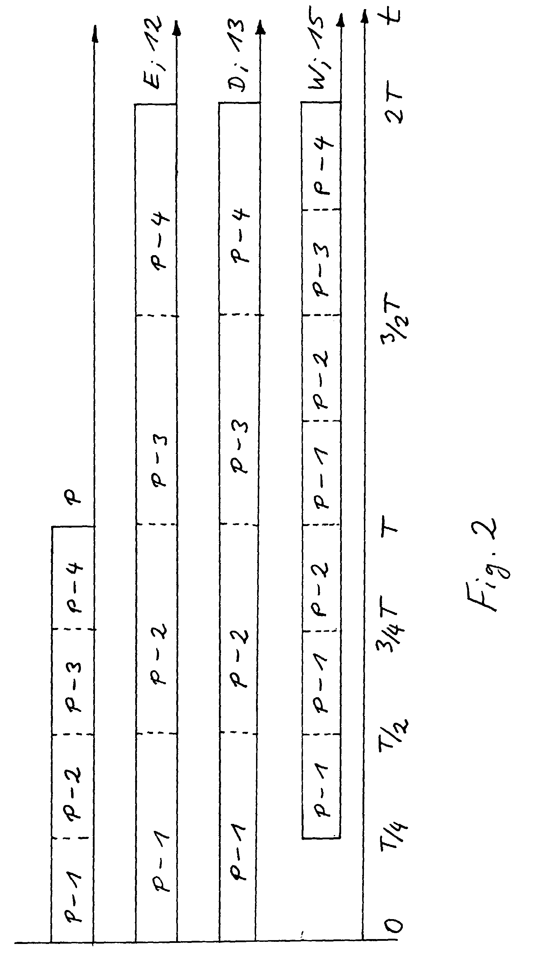

Bei beiden Varianten ist es möglich, die bereits empfangenen und weiterverarbeiteten Daten mehrmals sooft zu wiederholen, bis das gesamte Paket P von zu empfangenden komprimierten Daten 11 empfangen und weiterverarbeitet ist. Dieses wird nachstehend anhand von Figur 2 näher erläutert:

Dabei sind über einer horizontal verlaufenden Zeitachse, beschriftet mit "t", vier Kolonnen von Daten eines Paketes P komprimierter Daten 11 eingezeichnet. Die Zeitachse "t" weist unter anderem zwei markante Zeitpunkte auf, nämlich T und 2T. Bei dem Paket P kann es sich um Daten einer Audiosequenz handeln, beispielsweise um ein Musikstück. Ein übliches Abspielen dieses Musikstückes soll angenommenermaßen die Zeit T dauern. Eine Übertragung der komprimierten Daten 11 des Paketes P dieses Musikstücks samt deren Empfang soll, ebenfalls angenommenermaßen, die Zeit 2T benötigen, also die doppelte Zeit für das übliche Abspielen. Das Paket P sei nun, wiederum angenommenermaßen, in vier Teilpakete P-1, P-2, P-3 und P-4 eingeteilt. Das gesamte Paket P mit seinen 4 Teilpaketen P-1 bis P-4 ist in der obersten Kolonne dargestellt. Die empfangenen Signale 12, als Empfang E dargestellt in der zweiten Kolonne von oben, benötigen die Zeit von 2T, wobei jedes der Teilpakete P-1 bis P-4 T/2 dauert. In der dritten Kolonne von oben sind die dekomprimierten Signale 13 dargestellt als Kolonne D. Ihre gesamte Zeitdauer ist ebenfalls 2T, so daß die entsprechenden Teilpakete P-1 bis P-4 ebenfalls die Zeitdauer T/2 benötigen. In der untersten Kolonne, mit W bezeichnet, sind nun die wiederzugebenden Daten 15, d. h. also, die Musiktöne dargestellt. Da deren Wiedergabe aber nur halb solange dauert wie Übertragung, Empfang und Dekomprimierung, wird die Wiedergabe im vorliegenden Beispiel folgendermaßen durchgeführt:

Während des ersten eingezeichneten Zeitraums, der bis T/4 dauert, in dem das erste Teilpaket P-1 zur Übertragung, zum Empfang und zur Weiterverarbeitung ansteht, wird ein Teil desselben empfangen und dekodiert. Zur Wiedergabe kommen in diesem Zeitraum noch keine Daten, das heißt vorliegend: Töne.
Während des zweiten eingezeichneten Zeitraums, dauernd von T/4 bis T/2, werden die restlichen Daten des ersten Teilpakets P-1 empfangen und dekodiert. Gleichzeitig beginnt auch die Wiedergabe W der wiederzugebenden Daten 15 des ersten Teilpakets P-1. Zum Zeitpunkt T/2 sind sowohl Empfang wie auch Dekodierung und Wiedergabe der Daten des ersten Teilpaketes P-1 abgeschlossen.

Während der daran anschließenden Teilzeiträume von T/2 bis T werden die Daten des zweiten Teilpaketes T/2 empfangen und dekomprimiert. Zur Wiedergabe kommen allerdings zunächst, d. h. bis zum Zeitpunkt ¾ · T, nochmals die wiederzugebenden Daten 15 des ersten Teilpaketes T-1; sie werden also wiederholt. Daran schließt sich dann im Zeitraum von ¾ · T bis T die Wiedergabe der Daten des zweiten Teilpaketes P-2 an. Zum Zeitpunkt T sind also die Daten der ersten beiden Teilpakete P-1 und P-2 empfangen, dekomprimiert und wiedergegeben, wobei die Daten des ersten Teilpaketes P-1 zweimal wiedergegeben wurden. In den Zeiträumen von T bis 3/2 · T werden nun die Daten des dritten Teilpaketes P-3 empfangen und dekomprimiert. Gleichzeitig beginnt vom Zeitpunkt T an eine wiederholte Wiedergabe der Daten aus den ersten beiden Teilpaketen P-1 und P-2. Dies ist zum Zeitpunkt 3/2 · T beendet. In den noch verbleibenden Teilzeiträumen von 3/2 · T bis 2T werden die Daten des vierten Teilpaketes P-4 empfangen und dekomprimiert. Gleichzeitig werden jedoch auch die Daten aus dem dritten und dem vierten Teilpaket P-3, P-4 wiedergegeben, so daß sich zum Zeitpunkt 2T folgende Situation ergibt: Sämtliche Daten 11 des Paketes P sind empfangen, dekomprimiert und wiedergegeben worden. Dabei wurden die Daten aus dem ersten Teilpaket P-1 insgesamt dreimal wiedergegeben; diejenigen aus dem zweiten Teilpaket P-2 zweimal und die Daten aus den dritten und vierten Teilpaketen P-3, P-4 jeweils einmal.

Zu erwähnen ist noch, daß nach erfolgter Abspeicherung der gesamten Daten eines Paketes P diese selbstverständlich nochmals wiedergegeben werden können, wie aus Einrichtungen und Verfahren nach dem Stand der Technik als solches bereits bekannt.

## Patentansprüche

1. Einrichtung zum Empfang und zur Weiterverarbeitung eines Paketes komprimierter Daten mit folgenden Merkmalen:
- mit einer Empfangseinrichtung (1) zum Empfang der komprimierten Daten (11),
- mit einer Einrichtung (2) zum Dekomprimieren der empfangenen Daten (12),
- mit einer Einrichtung (3) zum Abspeichern der dekomprimierten Daten (13) in einer Speichervorrichtung (23), und
- mit einer Wiedergabesteuerung (4) zur Steuerung einer Wiedergabe der dekomprimierten Daten (13).

2. Einrichtung nach Anspruch 1,
**dadurch gekennzeichnet,**
daß die Wiedergabesteuerung (4) dazu dazu dient, in der Speichervorrichtung (23) bereits gespeicherte Daten des Paketes (P), das gerade empfangen wird, aus der Speichervorrichtung (23) auszulesen zum Zwecke der Wiedergabe der ausgelesenen Daten (14).

3. Einrichtung nach Anspruch 1 oder 2,
**dadurch gekennzeichnet,**
daß die komprimierten Daten (11) digitalisiert sind.

4. Einrichtung nach einem der vorhergehenden Ansprüche,
**dadurch gekennzeichnet,**
daß die komprimierten Daten (11) drahtlos übertragene Daten sind.

5. Einrichtung nach einem der vorhergehenden Ansprüche,
**dadurch gekennzeichnet,**
daß für die Wiedergabe eine Wiedergabeeinheit (5) vorgesehen ist.

6. Einrichtung nach Anspruch 5,
**dadurch gekennzeichnet,**
daß die Wiedergabeeinheit (5) eine Anzeige zur optischen Wiedergabe der wiederzugebenden Daten aufweist.

7. Einrichtung nach Anspruch 5 oder 6,
**dadurch gekennzeichnet,**
daß die Wiedergabeeinheit (5) Mittel zur akustischen Wiedergabe der wiederzugebenden Daten aufweist.

8. Einrichtung nach Anspruch 7,
**dadurch gekennzeichnet,**
daß die Mittel zur akustischen Wiedergabe wenigstens einen Lautsprecher umfassen.

9. Einrichtung nach einem der Ansprüche 5 bis 8,
**dadurch gekennzeichnet,**
daß die Wiedergabeeinheit (5) eine Ansteuerschaltung für die Wiedergabe aufweist.

10. Einrichtung nach einem der vorhergehenden Ansprüche,
**dadurch gekennzeichnet,**
daß die Empfangseinrichtung (1) eine Vorrichtung zum Empfang drahtlos übertragener Daten eines Telekommunikationssystems ist.

11. Einrichtung nach Anspruch 10,
**dadurch gekennzeichnet,**
daß das Telekommunikationssystem und die Empfangseinheit (1) der drahtlos übertragenen Daten nach dem GSM-Standard arbeiten.

12. Einrichtung nach einem der vorhergehenden Ansprüche,
**dadurch gekennzeichnet,**
daß die komprimierten Daten (11) Daten in Form von Sequenzen nach dem MP-3-Standard sind.

13. Einrichtung nach einem der vorhergehenden Ansprüche,
**dadurch gekennzeichnet,**
daß sie Bestandteil einer Rundfunk-Empfangseinrichtung (31) ist.

14. Einrichtung nach Anspruch 13,
**dadurch gekennzeichnet,**
daß die Rundfunk-Empfangseinrichtung (31) ein Autoradio ist.

15. Einrichtung nach Anspruch 13 oder 14,
**dadurch gekennzeichnet,**
daß die Rundfunk-Empfangseinrichtung (31) einen separaten Empfänger zum Empfang von Verkehrsfunk-Durchsagen aufweist.

16. Einrichtung nach einem der vorhergehenden Ansprüche,
**dadurch gekennzeichnet,**
daß die Rundfunk-Empfangseinrichtung (31) Bestandteil einer Funksignale empfangenden Einrichtung (33) ist, welche Funksignale zur Ortung der die Funksignale empfangenden Einrichtung (23) empfängt, insbesondere entsprechend dem GPS-System.

17. Einrichtung nach einem der Ansprüche 1 bis 16,
**dadurch gekennzeichnet,**
daß die Speichervorrichtung (23) ein nicht-flüchtiger Speicher ist.

18. Einrichtung nach Anspruch 17,
**dadurch gekennzeichnet,**
daß der nicht-flüchtige Speicher ein Speicher von Flash-Typ ist.

19. Einrichtung nach einem der Ansprüche 1 bis 16,
**dadurch gekennzeichnet,**
daß die Speichervorrichtung (23) ein flüchtiger Speicher ist.

20. Einrichtung nach Anspruch 19,
**dadurch gekennzeichnet,**
daß der flüchtige Speicher vom DRAM-Typ ist.

21. Einrichtung nach Anspruch 19 oder 20,
**dadurch gekennzeichnet,**
daß der flüchtige Speicher vom Dual-Port-RAM-Typ oder vom FIFO-Typ ist.

22. Verfahren zum Empfang und zur Weiterverarbeitung eines Paketes komprimierter Daten mit folgenden Schritten:
- Die komprimierten Daten (11) werden sukzessive mittels einer Empfangseinrichtung (1) empfangen;
- die empfangenen Daten (12) werden mittels einer Einrichtung (2) zum Dekomprimieren dekomprimiert;
- die dekomprimierten Daten (13) werden in einer Speichervorrichtung (23) abgespeichert;
- die dekomprimierten Daten (13) werden noch während des Empfangsvorganges für das gesamte Paket (P) mittels einer Wiedergabesteuerung (4) wiedergegeben.

23. Verfahren nach Anspruch 22,
**dadurch gekennzeichnet,**
daß noch während des Empfangsvorganges für das gesamte Paket (P) die gespeicherten Daten (14) mittels der Wiedergabesteuerung (4) aus der Speichervorrichtung (23) ausgelesen und wiedergegeben werden.

24. Verfahren nach Anspruch 22 oder 23,
**dadurch gekennzeichnet,**
daß die komprimierten Daten (11) als digitalisierte Daten empfangen werden.

25. Verfahren nach einem der Ansprüche 22 bis 24,
**dadurch gekennzeichnet,**
daß die komprimierten Daten (11) drahtlos empfangen werden.

26. Verfahren nach einem der Ansprüche 22 bis 25,
**dadurch gekennzeichnet,**
daß der Empfang drahtlos mittels eines Telekommunikationssystems erfolgt.

27. Verfahren nach Anspruch 26,
**dadurch gekennzeichnet,**
daß der Empfang nach dem GSM-Standard erfolgt.

28. Verfahren nach einem der Ansprüche 22 bis 27,
**dadurch gekennzeichnet,**
daß die Übertragung und der Empfang der Daten mittels des MP-3-Standards durchgeführt werden.

29. Verfahren nach einem der Ansprüche 22 bis 28,
**dadurch gekennzeichnet,**
daß die wiederzugebenden Daten (15) mittels der Wiedergabesteuerung (4) auf eine Wiedergabeeinheit (5) übertragen werden.

30. Verfahren nach Anspruch 29,
**dadurch gekennzeichnet,**
daß die Übertragung auf eine optische Anzeige als Wiedergabeeinheit (5) erfolgt.

31. Verfahren nach Anspruch 29 oder 30,
**dadurch gekennzeichnet,**
daß die Übertragung auf ein akustisches Wiedergabemittel, insbesondere wenigstens einen Lautsprecher, als Wiedergabeeinheit (5) erfolgt.

32. Verfahren nach einem der Ansprüche 29 bis 31,
**dadurch gekennzeichnet,**
daß die Übertragung mittels einer Ansteuerschaltung durchgeführt wird.

33. Verfahren nach einem der Ansprüche 22 bis 32,
**dadurch gekennzeichnet,**
daß Empfang und Weiterverarbeitung der Daten mit Hilfe eines an die Empfangseinrichtung (1), an die Einrichtung (2) zum Dekomprimieren der empfangenen Daten (12), an die Einrichtung (3) zum Abspeichern der dekomprimierten Daten (13) samt Speichervorrichtung (23) sowie an die Einrichtung (4) zum Wiedergeben der Daten angeschlossenen, entsprechend ausgestatteten Rundfunk-Empfangseinrichtung (31) durchgeführt wird, wobei die Rundfunk-Empfangseinrichtung (31) ggf. einen separaten Empfänger (32) zum Empfang von Verkehrsfunk-Durchsagen aufweist.

34. Verfahren nach einem der Ansprüche 32 bis 33,
**dadurch gekennzeichnet,**
daß es mit Hilfe einer Funksignale empfangenden Einrichtung (33) ausgeführt wird, welche Daten zu ihrer Ortung entsprechend dem GPS-System empfängt.

35. Verfahren nach einem der Ansprüche 22 bis 24,
**dadurch gekennzeichnet,**
daß das Abspeichern der dekomprimierten Daten (13) in einem nicht-flüchtigen Speicher erfolgt, insbesondere in einem Speicher von Flash-Typ.

36. Verfahren nach einem der Ansprüche 22 bis 34,
**dadurch gekennzeichnet,**
daß das Abspeichern der dekomprimierten Daten (13) in einem flüchtigen Speicher erfolgt, insbesondere in einem Speicher vom DRAM-Typ.

37. Verfahren nach einem der Ansprüche 22 bis 34,
**dadurch gekennzeichnet,**
daß das Abspeichern der dekomprimierten Daten (13) in einem flüchtigen Speicher erfolgt, insbesondere in einem Speicher vom Typ Dual-Port-RAM oder vom FIFO-Typ.

38. Verfahren nach einem der Ansprüche 22 bis 37,
**dadurch gekennzeichnet,**
daß das Abspeichern und die Wiedergabe im Wesentlichen gleichzeitig durchgeführt werden.

39. Verfahren nach einem der Ansprüche 22 bis 37,
**dadurch gekennzeichnet,**
daß mit der Wiedergabe während des Abspeicherns zeitversetzt zum Beginn des Abspeicherns begonnen wird.

40. Verfahren nach Anspruch 38 oder 39,
**dadurch gekennzeichnet,**
daß die Wiedergabe der Daten mehrmals sooft wiederholt wird, bis das gesamte Paket (P) von Daten (11) dekomprimiert und wiedergegeben ist.
